# EUROPÄISCHE PATENTSCHRIFT

(11) **EP 0 705 220 B1**
(45) Veröffentlichungstag und Bekanntmachung des Hinweises auf die Patenterteilung: **26.03.1997**
(21) Anmeldenummer: 94914356.4
(22) Anmeldetag: 10.04.1994
(51) Int. Cl.: C02F 1/32, C02F 1/72

(54) **VORRICHTUNG UND VERFAHREN ZUR OPTIMIERUNG DER INTENSITÄT DER AUF ZU BESTRAHLENDE FLÜSSIGABFÄLLE UND ABWÄSSER GERICHTETEN STRAHLUN G**
DEVICE AND PROCESS FOR OPTIMIZING THE INTENSITY OF RADIATION DIRECTED ONTO SEWAGE AND WASTE WATER
PROCEDE ET DISPOSITIF PERMETTANT D'OPTIMISER L'INTENSITE DU RAYONNEMENT DIRIGE SUR DES EAUX D'EGOUT ET DES EAUX USEES A IRRADIER

(30) Priorität: 27.04.1993 DE 4317939
(43) Veröffentlichungstag der Anmeldung: 10.04.1996
(73) Patentinhaber: THOMANETZ, Erwin, D-70184 Stuttgart (DE); RÖDER, Werner, 70653 Stuttgart (DE); SCHÖNHERR-THOMANETZ, Elisabeth, D-70184 Stuttgart (DE); JUNG, Darius, D-70184 Stuttgart (DE)
(72) Erfinder: THOMANETZ, Erwin, D-70184 Stuttgart (DE); RÖDER, Werner, 70653 Stuttgart (DE); SCHÖNHERR-THOMANETZ, Elisabeth, D-70184 Stuttgart (DE); JUNG, Darius, D-70184 Stuttgart (DE)
(86) Internationale Anmeldenummer: EP9401107
(87) Internationale Veröffentlichungsnummer: WO9425400

(56) Entgegenhaltungen:
- EP-A- 0 444 530
- FR-A- 2 091 028
- FR-A- 2 588 548

## Beschreibung

### Anwendungsgebiet

Die Erfindung betrifft eine Vorrichtung und ein Verfahren zur Optimierung der Intensität von UV-Strahlung auf Flüssigabfälle oder Abwässer und dient insbesondere zur Durchführung des bekannten Dekontaminations-Verfahrens der UV-katalysierten Naßoxidation.

### Stand der Technik

Schon um die Jahrhundertwende wurde UV-Strahlung zur Entkeimung von Milch eingesetzt. Später wurden Verfahren zur Behandlung verunreinigter Flüssigkeiten bekannt, bei welchen UV-Strahlung - in Kombination mit Oxidationsmitteln wie z.B. Sauerstoff oder Wasserstoffperoxid z.T. unter Zugabe von Katalysatoren und Aktivatoren - in den verschiedensten Bereichen, so z.B. auch bei der Abwasserbehandlung, zum Einsatz kam.

Das Verfahrensprinzip besteht darin, daß bei der Zersetzung von Wasserstoffperoxid kurzlebige, hochreaktive Radikale - insbesondere OH-Radikale - gebildet werden. Die Radikalbildung kann durch geeignete Katalysatoren z.B. UV-Strahlung erheblich gesteigert werden. Die stark oxidative Wirkung der OH-Radikale wird genutzt, indem die Wasserstoffperoxid-Zersetzung in kontaminierten Flüssigkeiten zur Oxidation und Elimination von unerwünschten Abfall- bzw. Abwasserinhaltstoffen durchgeführt wird. Durch Oxidation von Kohlenwasserstoffen resultieren letztlich die Oxidationsprodukte Kohlendioxid und Wasser.

Organisch gebundener Schwefel und Sulfide werden zu Sulfat umgesetzt, organisch gebundene Halogene werden zu Halogenidionen umgewandelt.

Diese bekannten Prinzipien werden in neuerer Zeit gewerblich genutzt:

So ist das 1991 mit dem Dr.-Rudolf-Eberle-Preis ausgezeichnete Verfahren der GOEMA Dr. Götzelmann GmbH, Vaihingen/Enz zu erwähnen, bei dem UV-Niederdruck-Tauchlampen zusammen mit Wasserstoffperoxid in einem Schlaufenreaktor eingesetzt werden, um Abwasserinhaltsstoffe wie z.B. Cyanid und Chlorkohlenwasserstoffe zu zerstören.

Inzwischen bieten mehrere Firmen - wie die Fa. Ultra Systems in Heidelberg, die Fa. NSW in Nordenham, die Fa. Keramchemie GmbH in Siershahn, die Fa. Wedeco in Herford, sowie die Fa. Roediger Anlagenbau in Hanau - UV-Reaktoren unterschiedlicher Bauart am Markt an, bei denen die Bestrahlungsvorrichtungen in die zu bestrahlende Flüssigkeit eintauchen.

Bei viskosen Medien, Suspensionen und Emulsionen und anderen Flüssigkeiten, die zur Belagbildung führen können, eignen sich diese Verfahren in der Praxis nicht, da ein direkter Kontakt zwischen der Strahlungsquelle und dem zu behandelnden Medium besteht, wodurch Belagbildung auf der Lampenoberflächen resultiert und die Strahlungsintensität in der Folge abnimmt.

Diese nachteiligen Aspekte wurden mit einem an der Universität Stuttgart entwickelten und im Jahre 1989 mit dem Océ-van der Grinten-Preis ausgezeichneten Verfahren zur Behandlung hochkontaminierter Medien vermieden, bei dem ein Kontakt zwischen Strahlungsquelle und Medium nicht besteht. Realisiert wurde dies mittels eines Fallfilmreaktors, bei dem in einem Rohr konzentrisch angeordnete UV-Niederdruck-Strahler einen an der Innenseite des Rohres fallenden Flüssigkeitsfilm, bestrahlen. In der Regel muß das Medium dabei in Kreislaufführung mehrmals an den Strahlern vorbeigeführt werden. Die Ausbildung des Fallfims erfolgt nach Überströmung einer Kante, die sich am oberen Ende des o.g. Fallfilmrohres befindet.

Dieses Verfahren wird bislang nicht gewerblich genutzt, sondern für Forschung und Lehre eingesetzt.

In der Patentanmeldung DE 40 05 488 (= EP-A-0 444 530) (Figur 2) wird ein Fallfilmreaktor beschrieben, der mit einem UV-Niederdruckstrahler mit nur 40 W Anschlußleistung betrieben wird, was einer UV-C-Leistung von maximal 16 Watt entspricht. Diese Leistung ist so gering, daß damit erfahrungsgemäß in der Praxis keine nennenswerten Effekte zu erzielen sind.

Der UV-Strahler befindet sich in einem einseitig geschlossenen Schutzrohr, so daß bei der beschriebenen Anordnung eine Aufheizung des Strahlers nicht zu vermeiden ist. Steigt die Oberflächentemperatur des Strahlers über ca. 40° C, so nimmt die UV-C-Intensität in der Folge erheblich ab. Laut Beschreibung sorgt eine parallel zum UV-Strahler verlaufende Staublende dafür, daß das zu behandelnde Wasser mit Überdruck in den zur Bestrahlung vorgesehenen Raum des Reaktorrohres gelangt. Der Druck bedingt eine Verspritzung des Abwassers am unteren Ende der Staublende, wodurch das Schutzrohr um den UV-Strahler verunreinigt wird und in der Folge eine Belagbildung auf dem Schutzrohr zur Absorption von UV-Strahlung führt.

### Aufgabe der Erfindung

Aufgabe vorliegender Erfindung ist es, durch baulich einfache, wirkungsvolle und kostengünstige Weise möglichst große Oberflächen eines zu bestrahlenden Mediums räumlich getrennt von den Strahlungsquellen mit einer größtmöglichen Ausnutzung der von den Strahlungsquellen emittierten Strahlen zu erfassen, um mit dieser Vorrichtung die UV- katalysierte Naßoxidation zur Elimination problematischer Inhaltstoffe effektiv zu nutzen, um eine erfolgswirksame, umweltfreundliche und kostengünstige Alternative zu anderen Behandlungsmaßnahme zu ermöglichen.

Die Bestrahlung großer Oberflächen ist bei der Durchführung der UV-katalysierten Naßoxidation relevant, da die Eindringtiefe der UV-Strahlung in trüben Abwässern oder in Abwässern mit hohen Konzentrationen an organischen und anorganischen Inhaltsstoffen in der Regel sehr klein ist und daher die UV-initiierten Reaktionen überwiegend nur an bestrahlten Oberflächen stattfinden.

Die Ausbildung des Fallfilms sowie die Führung des Fallfilms innerhalb des Bestrahlungsraums muß so ermöglicht werden, daß keine Ablösungen von Flüssigkeitsteilchen - insbesondere bei Inbetriebnahme der Vorrichtung und beim Durchsatz großer Abwassermengen - auftreten, die in der Folge zu einer Belagbildung auf den Bestrahlungseinrichtungen führen können und somit die Strahlungsintensität am zu bestrahlenden Fallfilm herabsetzen.

Des weiteren soll die Strahlungsintensität dadurch gesteigert werden, daß eine gegenseitige Absorption der Strahlen zweier benachbarter Strahlungsquellen, sowie eine Abnahme der Strahlungsintensität durch lange Strahlungswege vermieden wird.

### Erfindungsgemäßer Apparat

Erfindungsgemäß wird in einem Bestrahlungsraum aus UV-beständigem Material, vorzugsweise aus Edelstahl an zwei evtl. mit katalytisch wirkenden Oberflächen ausgestatteten, sich gegenüberliegenden, senkrecht stehenden Wänden 1 oder an Wänden, die gegenüber der Vertikalen geneigt sind ein gleichmäßiger Flüssigkeitsfilm erzeugt, indem das Medium - dem Wasserstoffperoxid oder ein anderes Oxidationsmittel wie z.B. Ozon zugegeben wird - über ein Anlaufprofil besonderer Bauart 2 eingeleitet wird. Aufgrund der unterschiedlichen Zusammensetzungen der Flüssigkeiten ergeben sich unterschiedliche Oberflächeneffekte an der Grenzschicht zwischen den Wandungen des Anlaufprofils und dem überströmenden Flüssigkeitsfilm. In ungünstigen Fällen kommt es zu einer ungleichmäßigen Benetzung und zu lokalen Überstauungen am Anlaufprofil, was zu einer Ablösung des Flüssigkeitsfilms von den Wandungen führt. Bei Inbetriebnahme wird ein Verteiler 3 durch mechanische, pneumatische oder elektromagnetische Antiebe in eine geeignete Position an das Anlaufprofil gebracht, um die oben beschriebene Ablösung des Flüssigkeitsfilms und die daraus resultierende Verschmutzung der Strahler- und Reflektoroberflächen 9, 7 bzw. der sie umgebenden Quarzglasrohe 6 zu vermeiden. Nachdem sich der Film ausgebildet hat, wird der Verteiler entfernt, so daß kein Kontakt zwischen Verteiler und Medium mehr besteht. Zur Vergrößerung der Bestrahlungsoberfläche und zur Erzeugung von Turbulenzen (so gelangen auch die wandseitigen Flüssigkeitsteilchen an die Oberfläche) können die Wände des Bestrahlungsraums mit einer geeigneten Profilierung versehen sein. Zwischen den Wänden befindet sich eine mit Führungsvorrichtungen versehene, herausnehmbare Bestrahlungseinheit (Inspektion und Strahlertausch) in die horizontal oder vertikal z.B. UV-Strahlungsquellen (UV-Niederdruck- oder UV-Hochdruck- oder UV-Niederdruck- in Kombination mit UV-Hochdruckstrahlern) und Spezialreflektoren mit quadratischem, rundem, rechteckigem, rautenförmigem oder elliptischem Querschnitt über die gesamte Länge so eingebaut sind, daß eine Diagonale des Reflektorquerschnitts im wesentlichen auf der Achse zwischen den Mittelpunkten der Querschnitte von zwei benachbarten Strahlungsquellen liegt. Eine direkte gegenseitige Bestrahlung der Strahler sowie die Rückreflexion in die Strahlungquellen und die dadurch bedingte Absorption der emittierten Strahlung wird durch die besondere Anordnung und o.g. Geometrie der Reflektoren vermieden. Der Einfallswinkel auf den Flüssigkeitsfilm wird vergrößert, Strahlen mit langen Strahlungswegen von der Strahlungsquelle zum Flüssigkeitsfilm werden durch entsprechende Umlenkung verkürzt, wodurch eine wesentliche Erhöhung der Bestrahlungsstärke, d.h. der Strahlendichte auf der Oberfläche des Mediums bzw. im Medium erreicht wird.

Es ist bekannt, daß auf Gläser aufgedampftes oder spiegelpoliert eloxiertes Aluminium gute Reflexionseigenschaften für UV-Strahlung (bis zu 90 %) besitzt. Durch den Einfluß aggressiver Medien würden die Reflektoroberflächen durch Korrosionsvorgänge ihre Wirkung verlieren. Daher werden die Reflektoren in stickstoffbefüllte oder evakuierte UV-durchlässige Schutzrohre installiert, wobei diese so konstruiert sind, daß eine Positionierung nur in der o.g. Anordnung möglich ist. Für den optimalen Betrieb der UV-Strahler ist die Temperierung ihrer Oberflächenwandungen wichtig. Dies wird erfindungsgemäß so realisiert, daß die Strahler konzentrisch innerhalb eines Quarzrohrs angeordnet sind, so daß in dem entstandenen Ringspalt Kühlluft durchgeleitet werden kann. Die Zufuhr von Kühlmedien erfolgt z.B. über einen zentralen Schacht, in dem die Kühlrohre münden.

Zur Kühlung der Strahleroberflächen tragen auch die o.e. Reflektoren wesentlich bei, da diese die Wärmestrahlung ebenfalls wegreflektieren, die dann über den Film abgeleitet wird.

Beim Auftreffen des Flüssigkeitsfilms auf die Wandungen des Ablaufs kann kaum vermieden werden, daß sich kleine Wassertröpfchen ablösen die zu einer Belagbildung an den Quarzglasrohren führt. Erfindungsgemäß wird dies mit einem profilierten, in der Breite einstellbaren Spritzschutz 8 der über die gesamte Länge unterhalb der Bestrahlungseinheit angebracht ist, vermieden. Ein baugleicher Spritzschutz 4, welcher oberhalb der Bestrahlungseinrichtung angebracht ist, verhindert das Auftreffen von Flüssigkeitströpfchen, die sich gegebenenfalls vom Anlaufprofil ablösen.

Die gesamte Vorrichtung kann zudem einen Behälter aus UV-beständigem Material, vorzugsweise aus Edelstahl beinhalten, der als Vorratsbehälter dient und von dem aus bei Betrieb das zu behandelnde Medium in den Bestrahlungsraum gepumpt wird und in freiem Gefälle von den Fallfilmwänden über einen Sammelablauf mit strömungsgünstiger Geometrie wieder in den Behälter zurückfließt. Hierbei sind folgende Betriebsarten möglich:
- Kreislaufführung im geschlossenen Kreislauf ein- oder mehrmals und anschließend Ablassen des gesamten Behälterinhalts.
- Unbehandeltes Medium wird kontinuierlich zugeführt und behandeltes entzogen, während der Kreislauf zwischen Bestrahlungsraum und Behälter besteht.

Die Ableitung der Abgase erfolgt entweder aus dem Bestrahlungsraum oder aus o.g. Vorratsbehälter.

### Bezugszeichenliste

1 - Wand
2 - Anlaufprofil
3 - Verteiler
4 - Spritzschutz oben
5 - Träger / Führungsvorrichtung
6 - UV-Strahlung nicht behinderndes Schutzrohr
7 - Reflektor
8 - Spritzschutz unten
9 - UV-Strahler
10 - Ablauf
11 - Bestrahlungsraum
12 - UV-Strahlung nicht behinderndes Schutzrohr für Reflektoren
13 - Kopfraum

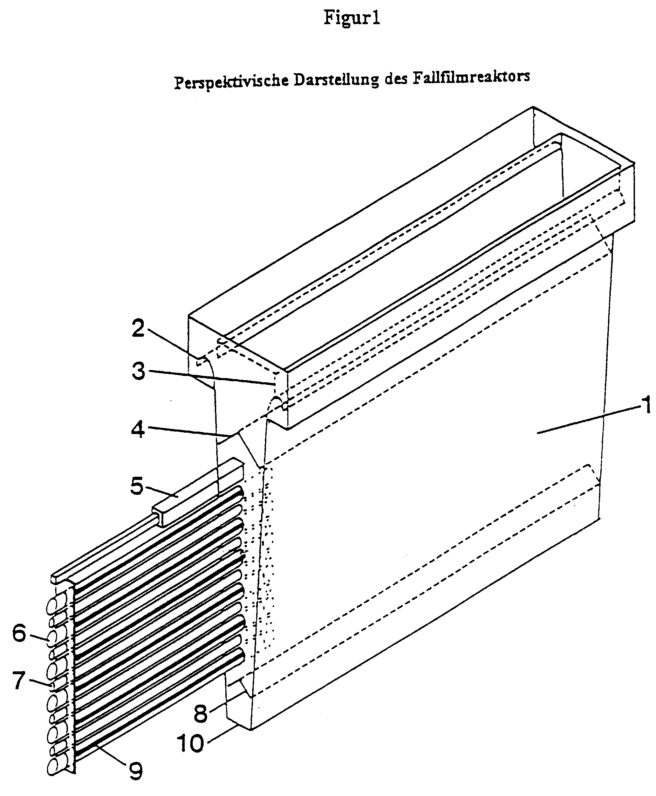

- Figur 1:: perspektivische Darstellung des Reaktors mit rechteckigem Querschnitt

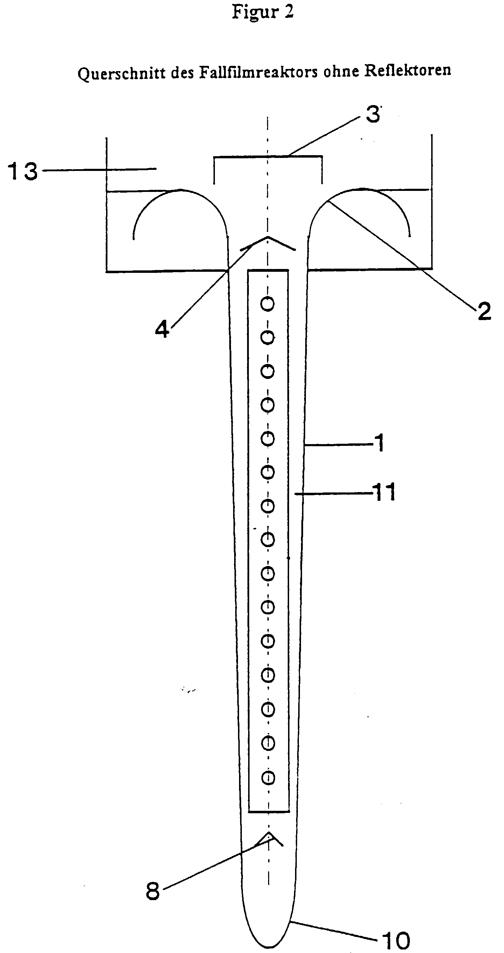

- Figur 2:: Querschnitt des Reaktors ohne Reflektoren

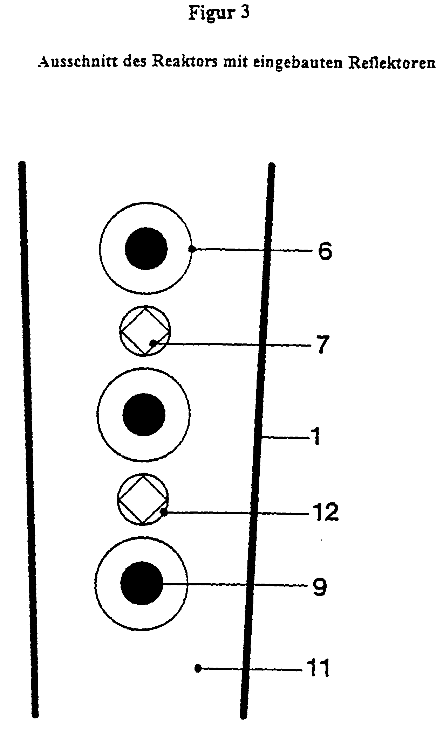

- Figur 3:: Ausschnitt des Reaktors mit UV-Strahlern, Reflektoren und Schutzrohren

## Patentansprüche

1. Fallfilmreaktor zur Behandlung flüssiger Abfälle, insbesondere Abwasser, mit folgenden Merkmalen:
- mindestens einem Bestrahlungsraum (11) aus UV-beständigem Material, bestehend aus mindestens zwei gegenüberliegenden, senkrecht stehenden oder gegenüber der Vertikalen geneigten Wänden (1)
- mit einer herausnehmbaren Bestrahlungseinheit (5/7/9), die zwischen den Wänden angebracht ist und die aus
- horizontal oder vertikal angeordneten UV-Strahlungsquellen (9)
- und Reflektoren (7) besteht wobei
- UV-Strahlungsquellen (9) und Reflektoren (7) so eingebaut sind, daß die Strahlung auf den Flüssigkeitsfilm (das Medium) umgelenkt wird und eine gegenseitige Bestrahlung der Strahler weitgehend ausgeschlossen ist .

2. Vorrichtung nach Anspruch 1, dadurch gekennzeichnet, daß die UV-Strahlungsquellen (9) konzentrisch innerhalb von UV-durchlässigen Schutzrohren (6) angeordnet sind um eine Kühlung mittels durchgeleiteter Kühlluft zu ermöglichen.

3. Vorrichtung nach Anspruch 1, dadurch gekennzeichnet, daß die Reflektoren (7) gasdicht von einer UV-durchlässigen Umhüllung (12) umgeben sind.

4. Vorrichtung nach vorhergehenden Ansprüchen, dadurch gekennzeichnet, daß mit jeweils einem Anlaufprofil oder Wehr (2) am oberen Ende der entsprechenden Wand die Flüssigkeit dieser zugeführt wird.

5. Vorrichtung nach Anspruch 1, dadurch gekennzeichnet, daß die Wände (1) des Bestrahlungsraumes mit einer Profilierung versehen sind.

6. Vorrichtung nach Anspruch 1, dadurch gekennzeichnet, daß die Wände (1) des Bestrahlungsraumes mit katalytisch wirkenden Oberflächen ausgestattet sind.

7. Vorrichtung nach Anspruch 1 und 3, dadurch gekennzeichnet, daß die Reflektoren (7) einen kreisförmigen, quadratischen, rechteckigen, vieleckigen, rautenförmigen oder elliptischen Querschnitt aufweisen.

8. Vorrichtung nach vorhergehenden Ansprüchen, dadurch gekennzeichnet, daß oberhalb und unterhalb der Bestrahlungseinheit ein Spritzschutz (4/8) angebracht ist.

9. Verfahren zur Optimierung der Intensität der auf zu bestrahlende Flüssigkeiten gerichteten Strahlung, bei dem der Fallfilmreaktor nach Anspruch 1 bis 8 eingesetzt wird, dadurch gekennzeichnet, daß
- die Flüssigkeit in mindestens einem Bestrahlungsraum an senkrecht stehenden oder gegenüber der Vertikalen geneigten Wänden (1) räumlich getrennt an einer herausnehmbaren Bestrahlungseinheit (5) vorbeigeführt wird, die aus
- UV-Strahlungsquellen (9) und Reflektoren (7) besteht, wobei
- UV-Strahlungsquellen und Reflektoren so eingebaut sind, daß die Strahlung auf den Flüssigkeitsfilm (das Medium) umgelenkt wird und eine gegenseitige Bestrahlung der Strahler weitgehend ausgeschlossen ist .

10. Verfahren nach Anspruch 9, dadurch gekennzeichnet, daß die Flüssigkeit mit Oxidationsmittel versehen ist.

## Claims

1. Falling film reactor for the treatment of liquid waste, especially waste water, with the following characteristics:
- at least one radiation chamber (11) consisting of UV-resistant material, consisting at least two facing walls (1) which are arranged vertical or sloping.
- with a removable radiation unit (5/7/9) between the walls which consist of
- horizontal or vertical arranged UV-radiators (9)
- and reflector(s) (7) by means of which
- UV-radiators (9) and reflectors are arranged in such a way, that the UV-rays are directed on to the liquid film and a facing radiation of the ultraviolet lamps is virtually impossible.

2. A device in accordance with claim 1 in which the UV-radiator(s) (9) (is) are arranged concentrically into (a) UV-permeable tube(s) (6) to allow a cooling of the lamp(s) by leading through air.

3. A device in accordance with claim 1 in which said reflector(s) (7) is (are) installed gastight in a UV-permeable cover (12).

4. A device in accordance with previous claims in which the liquid runs over a weir or a baffle-plate (2) installed at the upper end of the corresponding wall before the liquid is floating over the wall.

5. A device in accordance with claim 1 in which said walls (1) of the chamber are structurized.

6. A device in accordance with claim 1 in which said walls (1) of the chamber are provided with a surface which act as catalyst.

7. A device in accordance with claim 1 and 3 in which the cross-section of said reflector(s) is (are) circular or square or rectangular or polygonal or rhomboid or elliptic-shaped.

8. A device in accordance with previous claims in which on the top of and above of said removable radiation unit (5/7/9) a protection buffle (4/8) against spraying is installed.

9. Process for optimizing the intensity of radiation directed onto liquids, in which the falling film reactor according to claim 1 to 8 is used with
- the liquid which is passing at least in one radiation chamber with vertical or sloping walls (1) spatial separated from a removable radiation unit (5/7/9) which consists of
- ultraviolet radiators (9) and reflectors (7), whereas
- radiators and reflectors are installed in such a manner, that virtually the entire emitted radiation is directed onto the liquid film (medium) and that a facing radiation of two adjacent radiators is impossible.

10. Process in accordance with claim 9, in which the liquid is brought together with oxidizing agents.

## Revendications

1. Réacteur à film tombant pour le traitement des déchets liquides, en particulier des eaux usées, avec les caractéristiques suivantes :
- au moins une chambre d'irradiation (11) en matériau résistant aux rayons ultraviolets et composée d'au moins deux parois verticales l'une en face de l'autre ou de deux parois dont l'inclinaison est proche de la verticale (1)
- avec une unité d'irradiation amovible (51719) placée entre les parois et composée de
- sources d'irradiation U.V. disposées horizontalement ou verticalement (9)
- et de réflecteurs (7), toutefois
- les sources d'irradiation U.V. (9) et les réflecteurs (7) doivent être montés de telle sorte que le rayonnement soit dévié sur le film liquide (le milieu) et que toute irradiation réciproque des émetteurs de rayonnement soit absolument exclue.

2. Dispositif d'après la revendication 1 caractérisé par le fait que les sources d'irradiation U.V. (9) sont disposées de manière concentrique à l'intérieur de tubes de protection perméables aux rayons ultraviolets (6) afin de permettre le refroidissement avec l'amenée d'air de refroidissement.

3. Dispositif d'après la revendication 1 caractérisé par le fait que les réflecteurs (7) sont entourés d'une enveloppe étanche aux gaz et perméable aux rayons ultraviolets (12).

4. Dispositif d'après les revendications précédentes caractérisé par le fait qu'un profil ou un déversoir (2) placé à l'extrémité supérieure de la paroi concernée y amène le liquide.

5. Dispositif d'après la revendication 1 caractérisé par le fait que les parois (1) de la chambre d'irradiation sont dotées d'un profilage.

6. Dispositif d'après la revendication 1 caractérisé par le fait que les parois (1) de la chambre d'irradiation sont dotées de surfaces à effet catalytique.

7. Dispositif d'après les revendications 1 et 3 caractérisé par le fait que les réflecteurs (7) présentent une section circulaire, carrée, rectangulaire, polygonale, en losange ou elliptique.

8. Dispositif d'après les revendications précédentes caractérisé par le fait qu'une protection anti-éclaboussures (4/8) est disposée au-dessus et au-dessous de l'unité d'irradiation.

9. Procédé d'optimisation de l'intensité du rayonnement appliqué sur les liquides à irradier, avec lequel le réacteur à film tombant est utilisé d'après les revendications 1 à 8 caractérisé par le fait que
- le liquide passe dans, au moins, une chambre d'irradiation à côté d'une unité d'irradiation amovible (5) séparée par deux parois verticales l'une en face de l'autre ou de deux parois dont l'inclinaison est proche de la verticale (1)
- et composée de sources d'irradiation U.V. (9) et de réflecteurs (7), toutefois
- les sources d'irradiation U.V. (9) et les réflecteurs (7) doivent être montés de telle sorte que le rayonnement soit dévié sur le film liquide (le milieu) et que toute irradiation réciproque des émetteurs de rayonnement soit absolument exclue.

10. Procédé d'après la revendication 9 caractérisé par le fait que le liquide est doté d'un agent d'oxydation.
